# EUROPÄISCHE PATENTSCHRIFT

(11) **EP 1 403 952 B1**
(45) Veröffentlichungstag und Bekanntmachung des Hinweises auf die Patenterteilung: **20.08.2008**
(21) Anmeldenummer: 02021762.6
(22) Anmeldetag: 25.09.2002
(51) Int. Cl.: H01M 8/04, H01M 16/00

(54) **Externe Hybridisierung**
External hybridisation
Hybridation externe

(43) Veröffentlichungstag der Anmeldung: 31.03.2004
(73) Patentinhaber: SFC Smart Fuel Cell AG, 85649 Brunnthal-Nord (DE)
(72) Erfinder: Müller, Jens, Dr., 81827 München (DE); Freitag, Oliver, 81667 München (DE)
(74) Vertreter: Grünecker, Kinkeldey, Stockmair & Schwanhäusser Anwaltssozietät

(56) Entgegenhaltungen:
- EP-A- 0 860 889
- WO-A-00/35032
- WO-A-01/03223
- WO-A-92/10009
- WO-A-97/15106
- WO-A-98/24140
- GB-A- 1 103 821
- US-A1- 2002 102 447

## Beschreibung

### Gebiet der Erfindung

Die Erfindung betrifft eine Anschlusseinrichtung für einen elektrischen Verbraucher mit einer internen Energiequelle, um durch Anschließen einer externen Energiequelle eine Hybridenergiequelle aus interner und externer Energiequelle zu bilden, wobei die Anschlusseinrichtung eine Verschaltung umfasst, die so ausgebildet ist, dass eine an der Anschlusseinrichtung angeschlossene externe Energiequelle (i) in einem unterem Lastbereich den Verbraucher allein mit Energie versorgt und (ii) in einem oberen Lastbereich den Verbraucher zusammen mit der internen Energiequelle mit Energie versorgt. Ferner betrifft die Erfindung eine Schnittstelle bzw. einen elektrischen Verbraucher, die eine solche Anschlusseinrichtung aufweisen.

### Stand der Technik

Auf Batterie- und Netzbetrieb ausgelegte Verbraucher können vielfach wahlweise mit Einweg-Batterien (Primärelementen) oder wiederaufladbaren Akkus (Sekundärelementen) betrieben werden, wofür i.d.R. ein und derselbe Steckplatz verwendet wird. Da in diesem Fall ein Aufladen der internen Energiequelle (Batterie) vermieden werden muss, ist die Schnittstelle zum Netzanschluss in der Regel so ausgebildet, dass bei Netzbetrieb nur der Verbraucher mit Strom/Spannung versorgt wird und die Batterie vom Verbraucherkreis abgekoppelt wird. Bekannteste Beispiele hierfür sind größere tragbare Geräte aus dem Bereich der Audio-Unterhaltungselektronik, z.B. sog. Ghetto-Blaster.

Zahlreiche Verbraucher haben dagegen einen integrierten Akku als interne Energiequelle und sind zusätzlich mit einer Schnittstelle zum Anschließen einer externen Energiequelle ausgestattet, die derart ausgelegt ist, dass der Verbraucher über die externe Energiequelle betrieben werden und gleichzeitig die interne Energiequelle über die angeschlossene externe Energiequelle geladen werden kann. Beispiele hierfür sind die meisten gängigen Mobiltelefon- und Laptop-Modelle, bei denen der integrierte Akku in der Regel nicht durch handelsübliche Einweg-Batterien ersetzt werden kann.

In den oben genannten Fällen wird als externe Energiequelle in der Regel das Versorgungsnetz verwendet, wobei die Netzspannung durch ein - bei kompakteren Geräten meist externes, bei größeren Geräten meist internes - Netzteil auf ein erwünschtes Spannungsniveau gebracht wird.

Gegenüber der Energieversorgung über das Leitungsnetz weisen alternative Energiequellen wie z.B. Solarzellen und Brennstoffzellen zahlreiche Vorteile auf, insbesondere natürlich die Netzunabhängigkeit. Nun zeigen aber gerade die genannten alternativen Energiequellen, in denen Energie auf der Basis von Flächenprozessen erzeugt wird, eine starke Abhängigkeit der Herstellungskosten von der Leistungskapazität und damit der Größe der Energiequelle.

Selbst wenn also der zeitlich gemittelte Energieverbrauch von elektrischen Verbrauchern leicht von Solarzellen, Brennstoffzellen, etc., gedeckt werden könnte, wird deren Verwendung oft dadurch unlukrativ, dass sie stark überdimensioniert werden müssten, wenn sie auch gelegentlich auftretende, weit über den Durchschnittsbedarf hinausgehende Lastspitzen des Verbrauchers alleine bewältigen müssen oder wenn sie zusätzlich zum Betreiben des Verbrauchers noch genügend Kapazität zum gleichzeitigen Laden einer internen Energiequelle besitzen sollen.

Beispielweise muss ein Laptop-Netzteil, das gleichzeitig den Laptop-Akku lädt und den Laptop betreibt, etwa 75 W leisten, selbst wenn der Laptop-Betrieb allein mit nur etwa 20 W zu Buche schlägt.

Für Netzteile sind diese Unterschiede im Hinblick auf die Herstellungskosten so gering, dass ein größer dimensioniertes Netzteil immer noch wirtschaftlicher ist, als vermeintlich aufwändigere Lösungen. Dient dagegen beispielsweise ein Brennstoffzellensystem als externe Energiequelle, so zeigt eine einfache Kostenkalkulation, dass ein System, das so ausgelegt wird, dass es mit herkömmlichen Techniken einen Laptop betreiben und gleichzeitig dessen Akku aufladen kann, etwa doppelt so hohe Herstellungskosten aufweist, wie ein System, das nur den Laptop mit Energie versorgen muss.

Die Druckschrift EP 0271162 beschreibt einen elektrischen Verbraucher nach dem Stand der Technik mit einer Verbraucher-internen Energiequelle, zum Anschluss von Verbraucher-externen Solarzellen.

### Beschreibung der Erfindung

Es ist eine Aufgabe der Erfindung, die oben diskutierten Nachteile für den Einsatz von alternativen externen Energiequellen zu beseitigen.

Diese Aufgabe wird durch die Anschlusseinrichtung von Anspruch 1, durch die Anschlussschnittstelle von Anspruch 6, den elektrischen Verbraucher mit den Merkmalen des Anspruchs 8, und das Verfahren gemäß Anspruch 11 gelöst. Vorteilhafte Weiterbildungen und Detaillösungen der Erfindung sind in den Unteransprüchen angegeben.

Die erfindungsgemäße Anschlusseinrichtung für den Anschluss einer externen Energiequelle an einen elektrischen Verbraucher mit einer internen Energiequelle umfasst eine Verschaltung, die so ausgebildet ist, dass eine an der Anschlusseinrichtung angeschlossene externe Energiequelle in einem unterem Lastbereich den Verbraucher allein mit Energie versorgt und in einem oberen Lastbereich den Verbraucher zusammen mit der internen Energiequelle mit Energie versorgt.

Eine angeschlossene externe Energiequelle bildet mit der internen Energiequelle eine Hybridenergiequelle. Im Unterschied zu den aus der Technik bekannten Hybridmodulen, die aus einer vorgegebenen Kombination zweier (oder mehrerer) Energiequellen bestehen, erfolgt mit der vorliegenden Erfindung eine Hybridisierung erst durch das Anschlieβen einer externen Energiequelle an der erfindungsgemäßen Anschlusseinrichtung.

Die Lage des Übergangs vom unteren Lastbereich zum oberen Lastbereich hängt von den Charakteristiken der Energiequellen (Klemmenspannungen, Innenwiderstände) ab, insbesondere auch vom Ladezustand der internen Energiequelle.

Bei einem hohen Ladezustand der internen Energiequelle und/oder zur Erreichung einer noch höheren Mobilität kann die externe Energiequelle abgekoppelt werden und der Verbraucher allein mit der internen Energiequelle betrieben werden. Ist das Anschließen einer externen Energiequelle dagegen mit keinerlei praktischen Einschränkungen verbunden, so kann die interne Energiequelle geschont werden und der Betrieb des Verbrauchers ausschließlich über die externe Energiequelle gewährleistet werden oder zumindest durch die externe Energiequelle unterstützt werden.

Die erfindungsgemäße Anschlusseinrichtung ist besonders geeignet für einen elektrischen Verbraucher, dessen interne Energiequelle eine wiederaufladbare Energiequelle umfasst, wobei die Verschaltung der Anschlusseinrichtung vorteilhafterweise so ausgebildet ist, dass die wiederaufladbare Energiequelle durch die an der Anschlusseinrichtung angeschlossene externe Energiequelle wiederaufladbar ist.

Bei dieser Weiterbildung kann die wiederaufladbare Energiequelle bei ausgeschaltetem Verbraucher und im unteren Lastbereich des Verbrauchers durch die externe Energiequelle wieder aufgeladen werden, so dass sich interne und externe Energiequellen auf vorteilhafte Weise gegenseitig ergänzen:
- ausgeschalteter Verbraucher:
   externe Energiequelle lädt interne Energiequelle
- eingeschalteter Verbraucher:
   externe Energiequelle lädt interne Energiequelle und betreibt Verbraucher bzw.
   externe Energiequelle und interne Energiequelle betreiben Verbraucher.

Die Anschlusseinrichtung eignet sich besonders für elektrische Verbraucher, deren interne wiederaufladbare Energiequelle einen Kondensator und/oder einen Akkumulator umfasst, wobei die Verschaltung der Anschlusseinrichtung vorzugsweise so ausgebildet wird, dass die angeschlossene externe Energiequelle mit dem Kondensator und/oder dem Akkumulator parallelgeschaltet ist.

In diesem Fall können die externe Energiequelle und die interne Energiequelle ohne einen verlustbehafteten Spannungswandler miteinander verbunden werden, was nicht nur den Wirkungsgrad der resultierenden hybridisierten Energiequelle erhöht, sondern darüber hinaus auch die Ausbildung der Anschlusseinrichtung vereinfacht.

Der wesentliche Vorteil eines Kondensators liegt vor allem in der Unterstützung zur Bewältigung von Lastspitzen, wie sie unter anderem bei Einschaltvorgängen auftreten.

In einer bevorzugten Weiterbildung weist die Verschaltung wenigstens eine Verbindung zwischen der externen Energiequelle und dem Akkumulator zwei parallele Zweige auf, wobei der erste Zweig für die Aufladung des Akkumulators durch die externe Energiequelle vorgesehen ist und eine Ladebegrenzungseinrichtung zur Begrenzung der Aufladung aufweist, und der zweite Zweig zur Stromentnahme aus dem Akkumulator vorgesehen ist und eine Einrichtung aufweist, um die Aufladung des Akkumulators über den zweiten Zweig zu verhindern.

Die Ladebegrenzungseinrichtung kann beispielsweise einen Strom- und/oder Spannungsbegrenzer umfassen. Über die Ladebegrenzungseinrichtung kann Strom in den Akkumulator eingespeist, nicht aber entnommen werden. Die Einrichtung zum Verhindern der Aufladung des Akkumulators über den zweiten Zweig kann eine Diode umfassen, die allein die Stromentnahme, nicht aber die Stromeinspeisung, zulässt.

In einer weiteren bevorzugten Weiterbildung umfasst die Anschlusseinrichtung Einrichtungen, um einen Kurzschlussstrom durch die interne und/oder externe Energiequelle zu verhindern und/oder um einen Strom entgegen der natürlichen Stromrichtung der externen Energiequelle zu verhindern.

Kurzschlussströme können z.B. dann auftreten, wenn aufgrund eines Defekts in einer der beiden Energiequellen der Innenwiderstand zusammenbricht, was zur unkontrollierten Stromzunahme und irreparabler Beschädigung der Energiequellen führen könnte. Ferner können bei einer Brennstoffzelle und einer nicht wiederaufladbaren Batterie (Primärelement) Ströme entgegen der natürlichen Stromrichtung zu deren Zerstörung führen, weshalb solche Ströme ebenfalls vermieden werden sollten. Die hierzu verwendeten Einrichtungen umfassen unter anderem Kursschlusssicherungen und/oder Dioden.

Wie einleitend bereits angesprochen worden ist, weisen zahlreiche elektrische Verbraucher mit einer internen wiederaufladbaren Energiequelle (i.d.R.: Akkumulator) eine Anschlusseinrichtung zur Energieversorgung über die Netzspannung auf, mittels derer die interne Energiequelle über einen internen oder externen Laderegler aufgeladen werden kann und gleichzeitig der Verbraucher betrieben werden kann, so dass die interne Energiequelle zum Aufladen weder entnommen werden muss, noch der Betrieb des elektrischen Verbrauchers beim Aufladen auch nur kurzzeitig unterbrochen wird. Die oben beschriebene erfindungsgemäße Anschlusseinrichtung bietet nun die Möglichkeit, eine Anschlussschnittstelle bereitzustellen, die zwei Anschlusseinrichtungen umfasst: eine erste Anschlusseinrichtung zur Hybridisierung der internen Energiequelle mit einer externen Energiequelle, und eine zweite (herkömmliche) Anschlusseinrichtung zum Aufladen der internen Energiequelle über ein Netzteil.

Dadurch ist wahlweise die Energieversorgung des Verbrauchers über
(i) die interne Energiequelle,
(ii) eine netzunabhängige externe Energiequelle allein (unterer Lastbereich) oder zusammen mit der internen Energiequelle (oberer Lastbereich), oder
(iii) das Versorgungsnetz
möglich.

Vorzugsweise ist die Anschlussschnittstelle mit einer Schalteinrichtung versehen, die bei Anschluss eines Netzteils automatisch auf Netzbetrieb schaltet und die Anschlusseinrichtung für die zweite externe Energiequelle deaktiviert, z.B. mechanisch blockiert oder die der Hybridisierung mit der internen Energiequelle dienenden Leitungen unterbricht.

Zusätzlich kann noch ein manuell betätigbarer Schalter (oder eine ähnliche Betätigungseinrichtung) vorgesehen werden, dessen Betätigung die Hybridisierung zwischen externer Energiequelle und interner Energiequelle wahlweise aufhebt, wobei bei aufgehobener Hybridisierung die Energieversorgung des Verbrauchers lastunabhängig allein über die externe Energiequelle erfolgt. Dies kann z.B. dann sinnvoll sein, wenn eine wiederaufladbare Batterie (Sekundärelement) durch eine nicht-aufladbare Batterie (Primärelement) ersetzt wird. Anstelle des manuell betätigbaren Schalters kann auch eine automatisch gesteuerte Schalteinrichtung vorgesehen werden, die die Hybridisierung erst ab einem - vorbestimmten oder in Abhängigkeit von den Charakteristiken der externen und/oder internen Energiequelle ermittelten - Leistungsbedarf zuschaltet und darunter die Energieversorgung des Verbrauchers allein über die externe Energiequelle erfolgen lässt.

Um beim Anschließen von externen Energiequellen ein Verwechseln von netzunabhängiger und netzabhängiger Energieversorgung zu vermeiden, sind bei einer besonders bevorzugten Weiterbildung der Anschlussschnittstelle die erste und die zweite Anschlusseinrichtung derart unterschiedlich ausgebildet sind, dass ein fehlerhaftes Anschließen einer externen Energiequelle ausgeschlossen ist. Damit wird insbesondere das versehentliche Anschließen des Versorgungsnetzes an der ersten Anschlusseinrichtung vermieden, das zur Beschädigung oder Zerstörung der internen Energiequelle und/oder des Verbrauchers führen könnte.

Die der Erfindung zugrundeliegende Aufgabe wird ferner durch Bereitstellung von elektrischen Verbrauchern gelöst, die mit einer erfindungsgemäßen Anschlusseinrichtung oder einer erfindungsgemäßen Anschlussschnittstelle ausgerüstet sind.

Vorzugsweise umfasst jede Anschlusseinrichtung eines solchen elektrischen Verbrauchers eine Steckbuchse in einer Gehäusewand des elektrischen Verbrauchers, wodurch das An- und Abkoppeln der externen Energiequelle(n) benutzerfreundlich gestaltet wird. Sinnvollerweise sind die Steckbuchsen für netzunabhängige und netzabhängiger Energieversorgung unterschiedlich ausgebildet, um ein fehlerhaftes Anschließen auszuschließen. Vor allem sollte das Anschließen der Netzversorgung an der für die Hybridisierung vorgesehenen Anschlusseinrichtung nicht möglich sein, was beispielsweise auf einfache Art und Weise durch einen kleineren Buchsendurchmesser realisiert werden kann.

Beim erfindungsgemäßen Verfahren zur Energieversorgung eines elektrischen Verbrauchers mit einer internen Energiequelle wird die interne Energiequelle mit einer externen Energiequelle so hybridisiert, dass die externe Energiequelle
- in einem unterem Lastbereich den Verbraucher allein mit Energie versorgt und
- in einem oberen Lastbereich den Verbraucher zusammen mit der internen Energiequelle mit Energie versorgt.

Bei herkömmlichen Hybridkonzepten ist die Hybridenergiequelle des Verbrauchers entweder extern oder intern vorgesehen. Diesen beiden Extremen stellt die Erfindung eine vorteilhafte Alternative gegenüber: Der Verbraucher kann, falls notwendig, ohne externe Energiequelle betrieben werden, und deutlich kompakter konzipiert werden, als wenn eine Hybridenergiequelle intern untergebracht werden muss. Das erfindungsgemäße Verfahren lässt sich auf viele herkömmliche Verbraucher anwenden, ohne dass hierfür größere bauliche oder konstruktive Änderungen notwendig wären. Die zur Hybridisierung der externen und der internen Energiequellen erforderlichen Anschlüsse bzw. Verschaltungen lassen sich bei den meisten Verbrauchern ohne Probleme nachträglich einbauen bzw. durchführen.

Vorzugsweise erfolgt die Hybridisierung der externen Energiequelle mit der internen Energiequelle des elektrischen Verbrauchers über eine der oben beschriebenen erfindungsgemäßen Anschlusseinrichtungen. In diesem Fall kann die Hybridisierung z.B. durch einfaches An- oder Abstecken der externen Energiequelle erreicht bzw. aufgehoben werden.

Obwohl sich die Erfindung für alle Arten von elektrischen Verbrauchern eignet, die mit einer internen Energiequelle ausgestattet sind oder nachgerüstet werden können, ist sie besonders vorteilhaft für einen tragbaren Computer: die unterbrechungsfreie netzunabhängige Nutzungsdauer, die ohne die Erfindung durch die Kapazität des Akkus begrenzt ist, kann mit der Erfindung praktisch auf "Unendlich" ausgedehnt werden.

Nachfolgend wird die Erfindung anhand eines bevorzugten Ausführungsbeispiels unter Bezugnahme auf die beigefügte Figur erläutert.

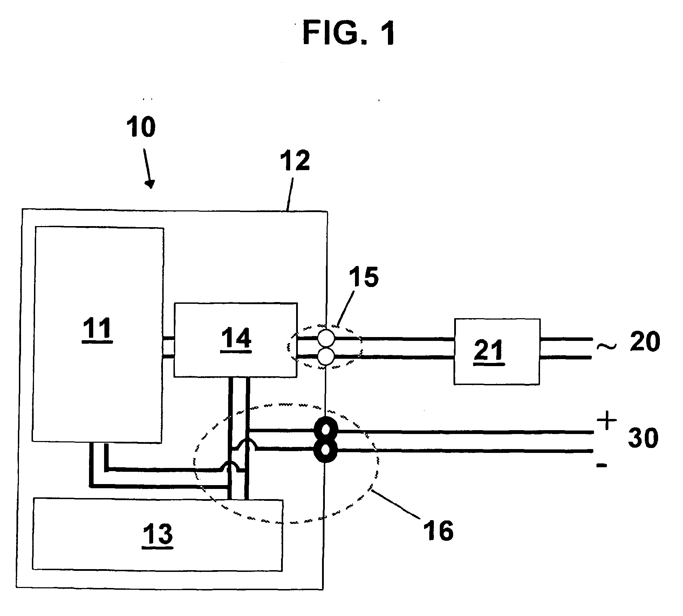

Fig. 1 zeigt: einen Verbraucher mit einer herkömmlichen Anschlusseinrichtung und einer erfindungsgemäßen Anschlusseinrichtung

Fig. 1 zeigt einen Verbraucher 10, der wahlweise über einen integrierten Akku 13, die Netzspannung 20 und/oder eine weitere externe Energiequelle 30 betrieben werden kann. Der Verbraucher 10 umfasst ein Gehäuse 12, das eine oder mehrere stromverbrauchende Komponenten 11 und einen wiederaufladbaren Akku 13 zur Stromversorgung der Komponenten 11 beinhaltet. Ferner ist ein Laderegler 14 vorgesehen, der es erlaubt, die Komponenten 11 über die Netzspannung 20 zu betreiben und dabei gleichzeitig den Akku 13 zu laden. Hierfür ist eine Anschlusseinrichtung 15 vorgesehen, die eine Buchse in der Gehäusewand des Verbrauchers 10 umfasst, über die ein Netzgerät 21 an den Laderegler 14 angeschlossen wird.

Neben der Anschlusseinrichtung 15 ist eine weitere Anschlusseinrichtung 16 vorgesehen, die es ermöglicht, eine externe Energiequelle 30 an einer weiteren Buchse anzuschließen und dabei direkt mit dem Akku 13 zu hybridisieren. Im vorliegenden Fall, der dann bevorzugt wird, wenn die externe Energiequelle 30 und der geladene Akku 13 etwa gleiche Nennspannung aufweisen, sind die externe Energiequelle 30 und der Akku 13 gleichpolig und ohne weitere elektronische Bauteile parallel miteinander verschaltet.

Ein bevorzugtes Einsatzfeld der Erfindung sind tragbare Computer (Laptops). Mit der oben beschriebenen bevorzugten Ausführungsform wird die Batterie eines Laptops mit einem externen, über ein Kabel an der hierfür vorgesehenen Anschlusseinrichtung angestecktem Brennstoffzellen-System über eine Parallelschaltung ("harte Ankopplung") hybridisiert. Anstelle des Brennstoffzellen-Systems können aber auch andere externe Energiequellen angeschlossen werden, insbesondere Solarmodule. Es können ferner Einrichtungen vorgesehen werden, mittels derer das Laptop erkennt, ob es durch ein Netzteil, allein durch die interne Batterie, oder durch eine Hybridenergiequelle aus externer Energiequelle und interner Batterie versorgt werden. Abhängig von der Art der Energieversorgung können bestimmte Parameter des Power Managements auf die jeweilige Betriebsart hin optimiert werden, z.B. Prozessorgeschwindigkeit. Weiterhin können Einrichtungen vorgesehen werden, die beim Anschließen eines Netzteil automatisch den Betriebsmodus des Laptops auf Netzteilbetrieb umschalten.

Auch die netzunabhängige externe Energiequelle kann prinzipiell als Hybridenergiequelle mit einem Akku ausgebildet sein. Da aber nahezu alle erhältlichen Laptops (wie auch viele andere Verbraucher) mit einem einen eigenen internen Akku besitzen, der auch beim Betreiben des Laptops mit einer externen Energiequelle aus verschiedensten Gründen im Gerät bleiben soll - etwa weil der Akku Teil des Gehäuses ist, weil der Benutzer dieses Benutzungsmuster gewohnt ist, zur Erhöhung der Betriebssicherheit usw. - ist es zweckmäßig, diesen internen zur Ausbildung der Hybridenergiequelle zu verwenden. Es können in diesem Fall Kosten-, Gewichts- und Platzeinsparungen gegenüber herkömmlichen Hybridenergiequellen erreicht werden, bei denen eine Energiequelle wie z.B. ein Brennstoffzellen-System mit einer externen Batterie kombiniert wird. Dies gilt um so mehr, als die heutzutage verwendeten (intern vorgesehenen) Batterien äußerst leistungsfähig sind.

Bei der erfindungsgemäßem Anschlussschnittstelle ist ein zusätzlicher Anschluss für eine externen Energiequelle (z.B. Brennstoffzelle) vorgesehen, die elektrisch direkt mit dem Anschluss des intern vorgesehenen Akkus verbunden ist. Es ist hierbei zu beachten, dass der gewöhnliche Anschluss für das externe Netzteil dafür nicht geeignet ist, weil er nicht direkt mit dem Akku, sondern nur indirekt über eine elektronische Schaltung (Laderegelung) verbunden ist. Dies hat zur Folge, dass beispielsweise das Laden eines Laptop-Akkus mit einer Nennspannung von etwa 12 V eine um etwa 50% höhere Spannung (ungefähr 18 V) erfordert.

Vorzugsweise erfolgt die elektrische Verschaltung von externer Energiequelle und intern vorgesehenem Akku über eine direkte Ankopplung, d.h. ohne einen Spannungswandler, wie sie beispielsweise in der europäischen Patentanmeldung mit dem Aktenzeichen 02013266.8 beschrieben wird. In diesem Fall sind die Spannungen der externen Energiequelle und des Akkus im Auslegungspunkt gleich oder zumindest fast gleich sind - im Unterschied zum Stand der Technik, nach dem ein externes Ladegerät stets eine deutlich höhere Spannung hat als der Akku.

Selbst wenn die externe Energiequelle selbst als eine Hybridenergiequelle mit einem eigenen Akku ausgestattet ist, kann dieser Akku der externen Energiequelle wegen der zusätzlichen Hybridisierung mit der internen Energiequelle des Verbrauchers deutlich verkleinert werden, was ebenfalls Kosteneinsparungen mit sich bringt.

Die zusätzliche Steckerbuchse für die netzunabhängige externe Energiequelle ist vorzugsweise so ausgebildet, dass sie vom Typ und/oder Größe her eine Verwechslung mit der Buchse für das Netzteil ausschließt. Für spezielle externe Energiequellen ist diese zusätzliche Buchse beispielsweise mit "Fuel / Solar Cell" gekennzeichnet und direkt mit der Batterie verbunden. Bei dieser Verbindung ist eine Kurzschlusssicherung eingebaut, die verhindert, dass der Akku z.B. im Falle eines schadhaften externen Brennstoffzellen-Systems oder Kabels kurzgeschlossen wird. Eine einfache Laderegelung kann ebenfalls in der externen Energiequelle, z.B. auf Seiten des Brennstoffzellen-Systems eingebaut sein.

Einige der wichtigsten Vorteile der Erfindung sollen nachfolgend nochmals zusammengefasst werden:
■ Kosten-, Gewichts- und Volumeneinsparung dadurch, dass maßgeschneiderte Dimensionierung von Brennstoffzellensystemen oder Solarmodulen usw. möglich wird und diese externen Energiequellen keinen bzw. nur einen sehr klein dimensionierten eigenen Akku benötigen.
■ Weitgehende Flexibilität und Kompatibilität - freie Wahlmöglichkeit zwischen Netzteilbetrieb, Batteriebetrieb, Brennstoffzelleribetrieb, sowie "hot-swap"-Fähigkeit (Umschalten im laufenden Betrieb).
■ Beseitigung von Hindernissen für die Markteinführung von Brennstoff-/Solarsystemen.
■ Erweiterung des Einsatzspektrums tragbarer elektronischer/elektrischer Geräte.
■ Vorteile von (1) Brennstoffzellensystemen oder (2) Solarmodulen, z.B. (1) längere Laufzeiten, sekundenschneller Austausch von Tankpatronen, Gewichtseinsparung usw., (2) umweltfreundliche Energiebereitstellung, Autarkie usw

Zahlreiche weitere Vorteile der Erfindung können unerwähnt bleiben, da sie sich dem Fachmann auf naheliegende Weise von selbst erschließen. Abschließend sei nochmals betont, dass die zuletzt genannten Beispiele nur zum besseren Verständnis der Erfindung dienen. Der Umfand der Erfindung selbst wird dagegen einzig und allein durch die nachfolgenden Patentansprüche definiert.

## Patentansprüche

1. Anschlusseinrichtung für ein tragbares elektrisches Gerät als elektrischen Verbraucher mit einer Verbraucher-internen Energiequelle, zum Anschluss einer Verbraucher-externen Energiequelle, insbesondere eines Brennstoffzellensystems oder eines Solarmoduls, wobei:
die Anschlusseinrichtung eine Verschaltung umfasst, die so ausgebildet ist, dass eine an der Anschlusseinrichtung angeschlossene Verbraucher -externe Energiequelle,
- in einem unteren Lastbereich den Verbraucher allein mit Energie versorgt und
- in einem oberen Lastbereich den Verbraucher zusammen mit der Verbraucher-internen Energiequelle mit Energie versorgt.

2. Anschlusseinrichtung nach Anspruch 1 für einen elektrischen Verbraucher, dessen interne Energiequelle eine wiederaufladbare Energiequelle umfasst, wobei:
die Verschaltung der Anschlusseinrichtung weiter so ausgebildet ist, dass die wiederaufladbare Energiequelle durch die an der Anschlusseinrichtung angeschlossene externe Energiequelle wiederaufladbar ist.

3. Anschlusseinrichtung nach Anspruch 2 für einen elektrischen Verbraucher, dessen interne wiederaufladbare Energiequelle einen Kondensator und/oder einen Akkumulator umfasst, wobei:
die Verschaltung der Anschlusseinrichtung so ausgebildet ist, dass die angeschlossene externe Energiequelle mit dem Kondensator und/oder dem Akkumulator parallelgeschaltet ist.

4. Anschlusseinrichtung nach Anspruch 3, bei welcher wenigstens eine Verbindung der Verschaltung zwischen der externen Energiequelle und dem Akkumulator zwei parallele Zweige aufweist, wobei
der erste Zweig für die Aufladung des Akkumulators durch die externe Energiequelle vorgesehen ist und eine Ladebegrenzungseinrichtung zur Begrenzung der Aufladung aufweist, und
der zweite Zweig zur Stromentnahme aus dem Akkumulator vorgesehen ist und eine Einrichtung aufweist, um die Aufladung des Akkumulators über den zweiten Zweig zu verhindern.

5. Anschlusseinrichtung nach einem der vorangegangenen Ansprüche, mit Einrichtungen, um einen Kurzschlussstrom durch die interne und/oder externe Energiequelle zu verhindern und/oder um einen Strom entgegen der natürlichen Stromrichtung der externen Energiequelle zu verhindern.

6. Anschlussschnittstelle für einen elektrischen Verbraucher mit einer internen wiederaufladbaren Energiequelle, umfassend:
eine erste Anschlusseinrichtung, die gemäß einem der vorangegangenen Ansprüche ausgebildet ist,
eine zweite Anschlusseinrichtung, die zum Aufladen der internen wiederaufladbaren Energiequelle über ein Netzteil ausgebildet ist.

7. Anschlussschnittstelle nach Anspruch 6, wobei die erste und die zweite Anschlusseinrichtung derart unterschiedlich ausgebildet sind, dass ein fehlerhaftes Anschließen einer externen Energiequelle ausgeschlossen ist.

8. Elektrischer Verbraucher mit einer Anschlusseinrichtung nach einem der Ansprüche 1 bis 5 oder einer Anschlussschnittstelle nach einem der Ansprüche 6 und 7.

9. Elektrischer Verbraucher nach Anspruch 8, bei welchem die Anschlusseinrichtungen Steckbuchsen in einer Gehäusewand des elektrischen Verbrauchers umfassen.

10. Elektrischer Verbraucher gemäß Anspruch 9, welcher einen tragbaren Computer umfasst.

11. Verfahren zur Energieversorgung eines tragbaren elektrischen Geräts als elektrischen Verbraucher mit einer Verbraucher-internen Energiequelle, bei welchem die Verbraucher-interne Energiequelle mit einer Verbraucher-externen Energiequelle, insbesondere einem Brennstoffzellensystem oder einem Solarmodul, so hybridisiert wird, dass die Verbraucher-externe Energiequelle
- in einem unteren Lastbereich den Verbraucher allein mit Energie versorgt und
- in einem oberen Lastbereich den Verbraucher zusammen mit der internen Energiequelle mit Energie versorgt.

12. Verfahren nach Anspruch 11, bei welchem die Hybridisierung der externen Energiequelle mit der internen Energiequelle des elektrischen Verbrauchers über eine Anschlusseinrichtung gemäß einem der Ansprüche 1 bis 5 ertolgt.

## Claims

1. A connector device for a portable electrical appliance in the form as an electrical consumer device with an internal energy source of the consumer device, for connection TO an external energy source of the consumer device, in particular a fuel cell system or a solar module, wherein:
the connector device comprises an interconnection which is designed so that the external energy source of the consumer device connected to the connector device
- in a lower load range supplies the consumer device alone with energy and
- in an upper load range supplies the consumer device with energy together with the internal energy source of the consumer device.

2. A connector device according to Claim 1 for an electrical consumer device, the internal energy source of which comprises a rechargeable energy source, wherein:
the interconnection of the connector device is further designed so that the rechargeable energy source can be recharged by the external energy source connected to the connector device.

3. A connector device according to Claim 2 for an electrical consumer device, the internal rechargeable energy source of which comprises a capacitor and/or a storage battery,
wherein:
the interconnection of the connector device is so designed that the connected external energy source is connected in parallel to the capacitor and/or the storage battery.

4. A connector device according to Claim 3, in which at least one connection of the interconnection has two parallel branches between the external energy source and the accumulator, wherein
the first branch is provided for charging the storage battery by the external energy source and has a charge-limiting device for limiting the charge, and
the second branch is provided for current drain from the storage battery and has a device for preventing charging of the storage battery via the second branch.

5. A connector device according to any one of the preceding Claims, with means for preventing a short-circuit current through the internal and/or external energy source, and/or for preventing a current counter to the natural current direction of the external energy source.

6. A connector interface for an electrical consumer device with an internal rechargeable energy source, comprising:
a first connector device which is designed in accordance with any one of the preceding Claims,
a second connector device which is designed for charging the internal rechargeable energy source via a power supply unit.

7. A connector interface according to Claim 6, wherein the first connector device and the second connector device are of different design so as to preclude incorrect connection to the external energy source.

8. An electrical consumer device with a connector device according to any one of Claims 1 to 5 or with a connector interface according to one of Claims 6 and 7.

9. An electrical consumer device according to Claim 8, in which the connector devices comprise connector sockets in a housing wall of the electrical consumer device.

10. An electrical consumer device according to Claim 9, which comprises a portable computer.

11. A method of supplying energy to a portable electrical appliance in the form an electrical consumer device with an internal energy source of the consumer device, in which the internal energy source of the consumer device is so hybridised with an external energy source of the consumer device, in particular a fuel cell system or a solar module, that the external energy source of the consumer device
- in a lower load range supplies the consumer device alone with energy and
- in an upper load range supplies the consumer device with energy together with the internal energy source.

12. A method according to Claim 11, in which the hybridisation of the external energy source is effected with the internal energy source of the electrical consumer device via a connector device in accordance with any one of Claims 1 to 5.

## Revendications

1. Dispositif de connexion pour un appareil électrique portable en tant que consommateur électrique avec une source d'énergie interne au consommateur, pour la connexion d'une source d'énergie externe au consommateur, notamment d'un système de piles à combustible ou d'un module solaire,
le dispositif de connexion comportant une connexion, qui est réalisée de manière à ce qu'une source d'énergie externe au consommateur raccordée au dispositif de connexion
- alimente seule en énergie le consommateur dans une gamme de charge inférieure et
- alimente en énergie le consommateur, conjointement avec la source d'énergie interne au consommateur, dans une gamme de charge supérieure.

2. Dispositif de connexion selon la revendication 1 pour un consommateur électrique, dont la source d'énergie interne comporte une source d'énergie rechargeable,
la connexion du dispositif de connexion étant en outre réalisée de manière à ce que la source d'énergie rechargeable puisse être rechargée par la source d'énergie externe raccordée au dispositif de connexion.

3. Dispositif de connexion selon la revendication 2 pour un consommateur électrique, dont la source d'énergie interne rechargeable comporte un condensateur et/ou un accumulateur,
la connexion du dispositif de connexion étant réalisée de manière à ce que la source d'énergie externe raccordée soit couplée en parallèle au condensateur et/ou à l'accumulateur.

4. Dispositif de connexion selon la revendication 3, au moins une liaison de la connexion entre la source d'énergie externe et l'accumulateur présentant deux branches parallèles,
la première branche étant prévue pour la charge de l'accumulateur par la source d'énergie externe et présentant un dispositif de limitation de charge destiné à limiter la charge, et
la seconde branche étant prévue pour la consommation de courant à partir de l'accumulateur et présentant un dispositif pour empêcher la charge de l'accumulateur par l'intermédiaire de la seconde branche.

5. Dispositif de connexion selon l'une quelconque des revendications précédentes, avec des dispositifs visant à empêcher un courant de court-circuit par la source d'énergie interne et/ou externe et/ou visant à empêcher un courant contre la direction naturelle du courant de la source d'énergie externe.

6. Interface de connexion pour un consommateur électrique avec une source d'énergie interne rechargeable, comportant :
un premier dispositif de connexion, qui est réalisé selon l'une quelconque des revendications précédentes,
un second dispositif de connexion, qui est réalisé pour la charge de la source d'énergie interne rechargeable par l'intermédiaire d'une alimentation électrique.

7. Interface de connexion selon la revendication 6, le premier et le second dispositif de connexion étant réalisés différemment de manière à ce qu'un raccordement défectueux d'une source d'énergie externe soit exclu.

8. Consommateur électrique avec un dispositif de connexion selon l'une quelconque des revendications 1 à 5 ou avec une interface de connexion selon l'une quelconque des revendications 6 et 7.

9. Consommateur électrique selon la revendication 8, dans le cadre duquel les dispositifs de connexion comportent des fiches plates dans une paroi de logement du consommateur électrique.

10. Consommateur électrique selon la revendication 9, lequel comporte un ordinateur portable.

11. Procédé destiné à alimenter en énergie un appareil électrique portable en tant que consommateur électrique avec une source d'énergie interne au consommateur, dans le cadre duquel la source d'énergie interne au consommateur est hybridée avec une source d'énergie externe au consommateur, notamment avec un système de piles à combustible ou avec un module solaire, de manière à ce que la source d'énergie externe au consommateur
- alimente seule en énergie le consommateur dans une gamme de charge inférieure et
- alimente en énergie le consommateur conjointement avec la source d'énergie interne dans une gamme de charge supérieure.

12. Procédé selon la revendication 11, dans le cadre duquel l'hybridation de la source d'énergie externe avec la source d'énergie interne du consommateur électrique est réalisée par l'intermédiaire d'un dispositif de connexion selon l'une quelconque des revendications 1 à 5.
